# EUROPEAN PATENT SPECIFICATION

(11) **EP 4 295 659 B1**
(45) Date of publication and mention of the grant of the patent: **15.07.2026**
(21) Application number: 22885677.9
(22) Date of filing: 12.10.2022
(51) Int. Cl.: A01D 34/00, A01D 34/68

(54) **WALK-BEHIND POWER TOOL**
HANDGEFÜHRTES ELEKTROWERKZEUG
OUTIL ÉLECTRIQUE POUSSÉ

(30) Priority: 01.11.2021 CN 202111284012; 08.12.2021 CN 202123106186 U; 26.07.2022 CN 202221939497 U
(43) Date of publication of application: 27.12.2023
(73) Proprietor: Nanjing Chervon Industry Co., Ltd., Nanjing, Jiangsu 211106 (CN)
(72) Inventor: FENG, Jifeng, Nanjing, Jiangsu 211106 (CN); XIAN, Chao, Nanjing, Jiangsu 211106 (CN); CHEN, Zhe, Nanjing, Jiangsu 211106 (CN); YAMAOKA, Toshinari, Nanjing, Jiangsu 211106 (CN); ZHANG, Qi, Nanjing, Jiangsu 211106 (CN); FU, Shichang, Nanjing, Jiangsu 211106 (CN)
(74) Representative: Sun, Yiming
(86) International application number: PCT/CN2022/124869
(87) International publication number: WO 2023/071798

(56) References cited:
- EP-A1- 1 698 221
- EP-A1- 4 335 601
- CN-A- 1 828 459
- CN-A- 104 582 468
- CN-A- 108 040 578
- CN-A- 108 040 579
- CN-A- 112 512 300
- CN-A- 112 512 300
- CN-U- 205 232 788
- CN-U- 208 638 994
- CN-U- 210 113 796
- DE-T5- 112018 007 931
- US-A1- 2003 144 774
- US-A1- 2016 106 031
- US-A1- 2021 137 341

## Description

### TECHNICAL FIELD

The present invention relates to a power tool and, in particular, to a walk-behind working machine.

### BACKGROUND

A walk-behind working machine may be a machine for a user to perform garden work, specifically a working machine such as a mower or a snow thrower that can work in grasslands, snowfields, or other environments and has a pushable function.

In the walk-behind working machine on the market, one or more separate buttons are generally used to control various functions of the machine. Many walk-behind working machines cannot remind the user of the current working mode of the working machine, and the user needs to determine the working state of the working machine through the experience obtained during the long-term operation. For example, for some mowers, after the user adjusts the rotational speed of the blades of the mower, the only method for determining whether the blades are adjusted to an appropriate rotational speed is to hear a louder sound made by the mower. However, being able to do this skillfully requires the user to accumulate certain operating experience, which may not be possible for the user who uses the machine tool less frequently. Moreover, some walk-behind working machines feed back the working state information of the working machine to the user in the form of relatively independent indicator lights being lit or extinguished.

US2021137341A1 relates to a cleaning apparatus. The cleaning apparatus includes at least one cleaning tool for cleaning an object to be cleaned, an operating unit for a user, which includes at least one operating element for operating the cleaning apparatus, a control unit for processing operating instructions, a receptacle, arranged on the operating unit, for an external accessory that can be associated with the cleaning apparatus and that has a display device with an image display, wherein the accessory is removably positionable in the receptacle in a defined position, as well as a communication unit by way of which display information for being displayed on the image display are transmittable from the cleaning apparatus to the accessory positioned in the receptacle. The invention also relates to a cleaning system.

EP4335601A1 relates to a robot, comprising: a robot body; a first support, which is mounted within the robot body; an armrest assembly, which comprises a connector, an armrest body that is provided at one end of the connector, and a first assembly end that is provided at the other end of the connector; a turnover mechanism, which comprises a first shaft, wherein the first shaft connects the first assembly end to the first support, the armrest body and the connector may be turned over relative to the robot body around the axis of the first shaft, the armrest assembly being used so that the armrest body moves away from the robot body when in a first turnover position, and the armrest body being used so that the armrest body and the connector are attached to the robot body when in a second turnover position.

CN112512300A discloses a handle assembly for an autonomous vehicle such as a lawn mower. It may include a cradle adapted to receive a mobile computer. The mobile computer may communicate with a controller carried by the mower. The handle assembly may be configured in both an autonomous mode position and a manual mode position. The vehicle may operate autonomously when the handle assembly is in the autonomous mode position, and be adapted to move under manual operator control, e.g., for perimeter training, when the handle assembly is in the manual mode position. Methods for training the mower and apparatus for storing the mower are also provided.

US2016106031A1 discloses automatic turn-sensing ground speed reduction systems and related methods for walk-behind, self-propelled machines. In one aspect, automatic turn-sensing ground speed reduction systems and related methods can include a control unit and a sensor. The sensor can be configured to transmit a signal to the control unit. In some aspects, the sensor can include a gyroscope that can be configured to transmit the signal to the control unit, the signal corresponding to an angular velocity of the walk-behind machine measured about a vertical axis perpendicular to a ground surface on which the walk-behind machine can be self-propelled. The control unit can be configured to automatically adjust a ground speed of the walk-behind machine during turning movement of the walk-behind machine based upon the signal.

EP1698221A1 discloses a method of controlling a greens mower, wherein the greens mower includes a motor drive system variably driving a grass cutting reel and a traction system.

### SUMMARY

To solve the deficiencies in the related art, an object of the present invention is to provide a display capable of displaying information in a centralized manner for a walk-behind working machine, and the display can display the working mode, power, and other relevant information of a working machine at the same time so that it is convenient for a user to acquire the work information of the working machine at a glance.

To achieve the preceding object, the present invention is set out in the appended set of claims.

### BRIEF DESCRIPTION OF DRAWINGS

FIG. 1 is a perspective view of a walk-behind working machine;
FIG. 2 is a perspective view of a display, a handle device, and part of a connecting rod assembly of the walk-behind working machine in FIG. 1 from a certain perspective;
FIG. 3 is a perspective view of the display, the handle device, and part of the connecting rod assembly of the walk-behind working machine in FIG. 2 from another perspective;
FIG. 4 is a partial enlarged view of the display and function keys of the walk-behind working machine in FIG. 3;
FIG. 5 is a schematic view of a display in a walk-behind working machine as an example;
FIG. 6 is an exploded view of the structure of the display in FIG. 5 from a certain perspective;
FIG. 7 is a partial assembly schematic view of a display from another perspective;
FIG. 8 is a partial enlarged view of a snap on the display in FIG. 4;
FIG. 9 is an exploded view of the display in FIG. 4 as an example from a certain perspective;
FIG. 10 is an exploded view of the display in FIG. 4 from another perspective;
FIG. 11 is a schematic view of a light guide portion of the display in FIGS. 9 and 10;
FIG. 12 is an exploded view of a display as an example;
FIG. 13 is a side sectional view of the display shown in FIGS. 9 and 10;
FIG. 14 is a perspective view of a length-adjustable telescopic rod structure;
FIG. 15 is an exploded view of a telescopic rod structure from a certain perspective as a first example;
FIG. 16 is a perspective view of a locking assembly in FIG. 15 in a first state;
FIG. 17 is a side sectional view of a locking assembly in FIG. 15 in a first state;
FIG. 18 is an exploded view of a locking rod and a first locking assembly in FIG. 16;
FIG. 19 is a schematic view of a locking rod and an operating member in FIG. 15;
FIG. 20 is a partial schematic view of an example of a locking rod;
FIG. 21 is a side sectional view when the locking rod in a telescopic rod structure in

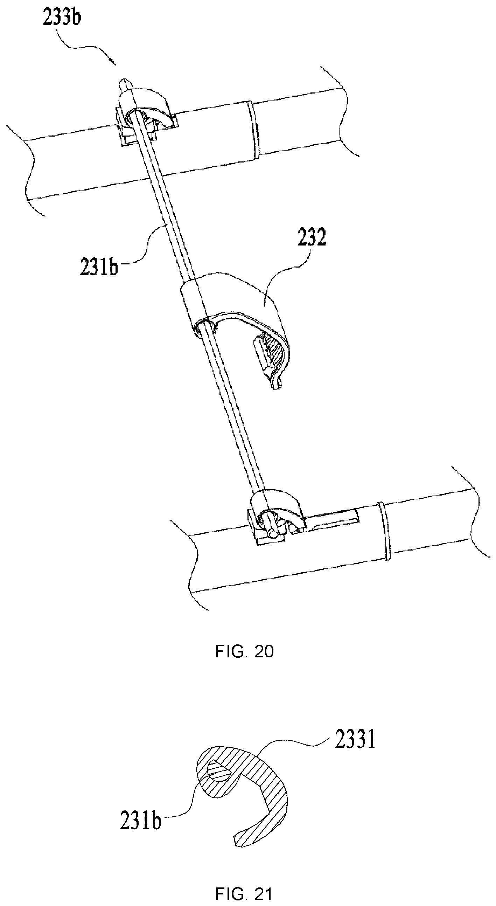

FIG. 20 mates with a first rotary member;

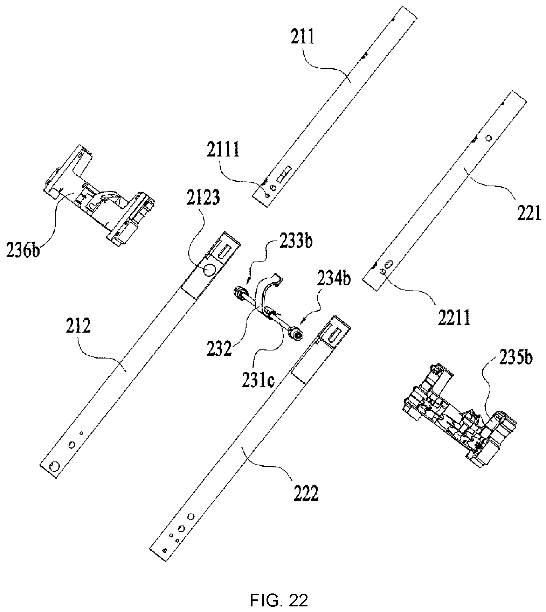

FIG. 22 is an exploded view of a telescopic rod structure as a second example;

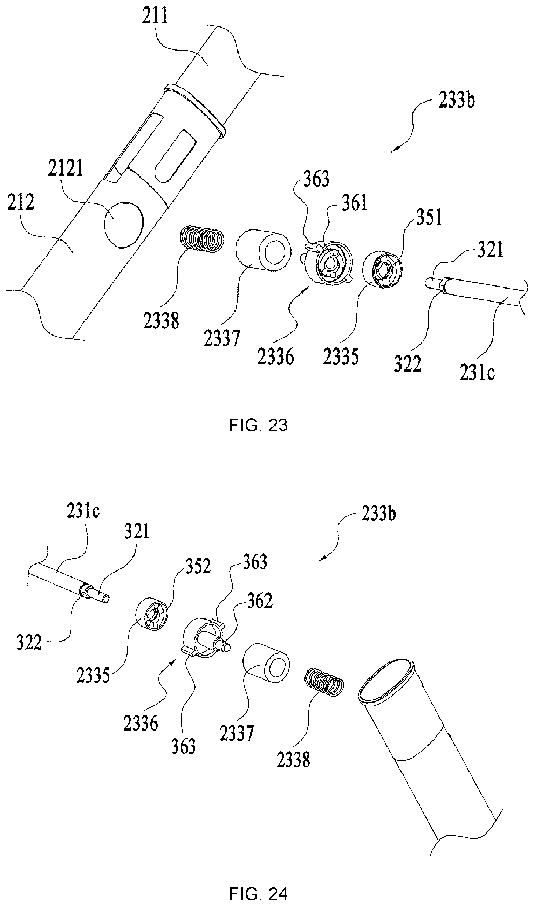

FIG. 23 is an exploded view of a locking rod and a first locking assembly in FIG. 22 from a certain perspective;
FIG. 24 is an exploded view of a locking rod and a first locking assembly in FIG. 22 from another perspective;

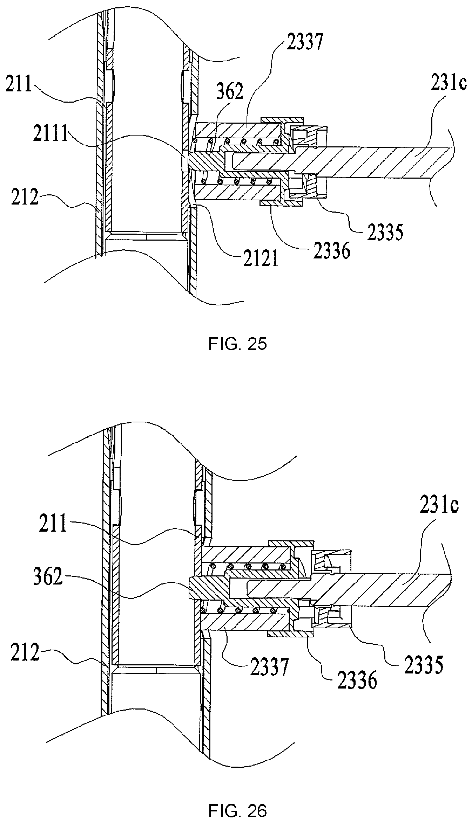

FIG. 25 is a side sectional view of a locking assembly in FIG. 22 in a first state;
FIG. 26 is a side sectional view of a locking assembly in FIG. 22 in a first state;

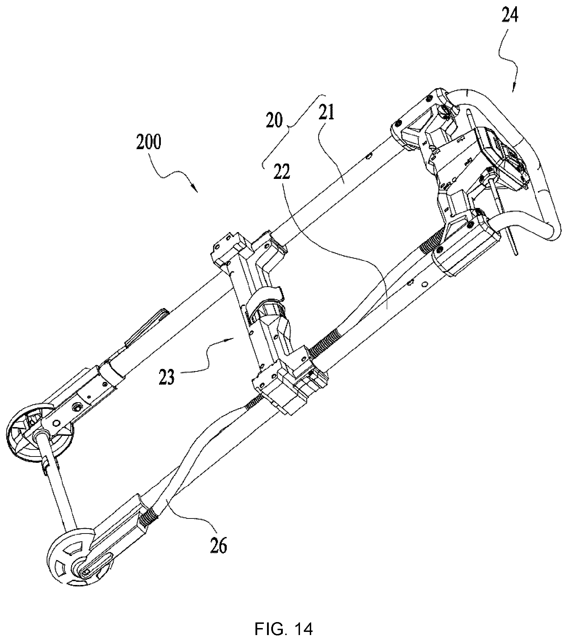

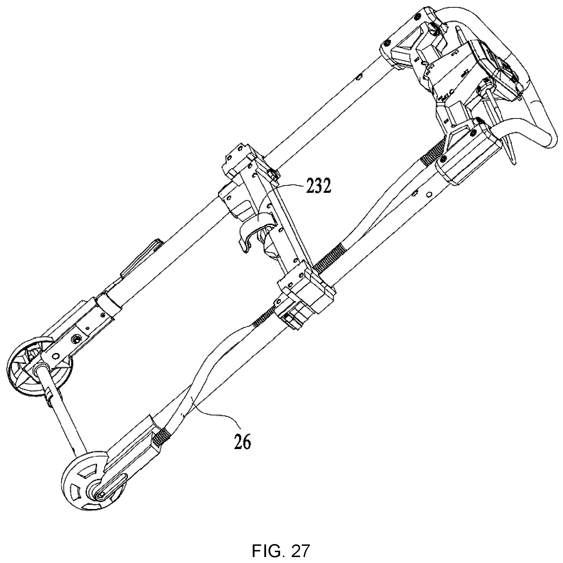

FIG. 27 is a schematic view when an operating handle in FIG. 14 is at another position;

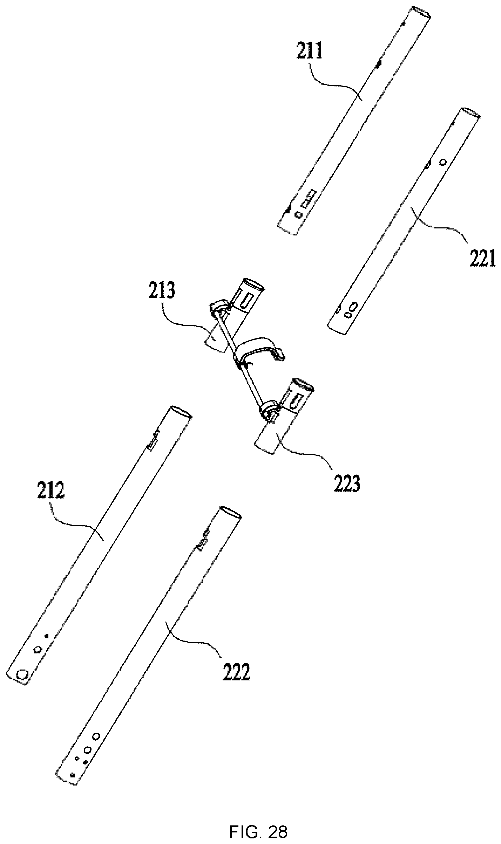

FIG. 28 is an exploded view as an example of a telescopic rod assembly;

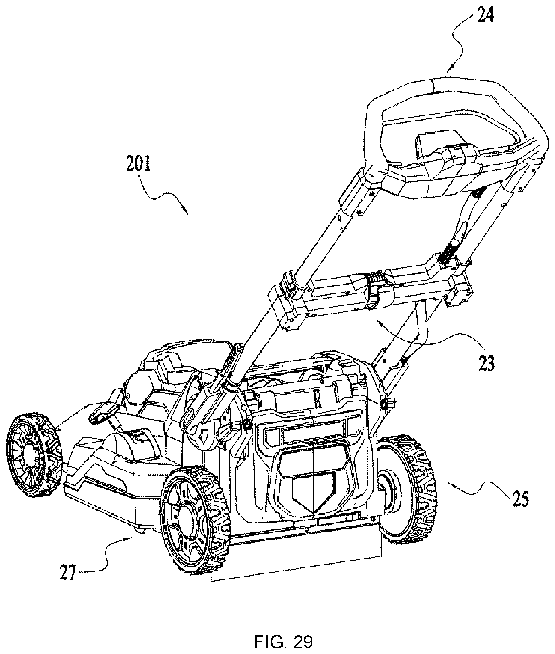

FIG. 29 is a schematic view of a walk-behind working machine;

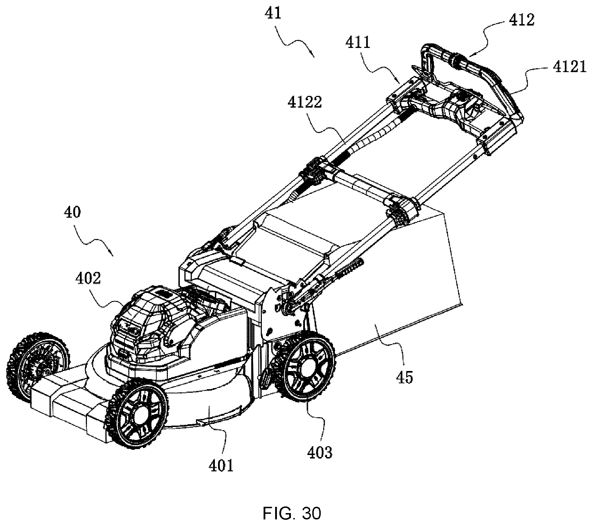

FIG. 30 is a structural view of a walk-behind working machine according to an example of the present invention;

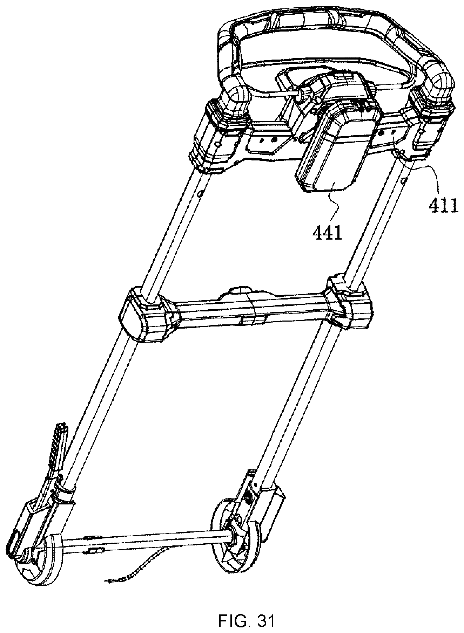

FIG. 31 is a structural view of an operating device according to an example of the present invention;

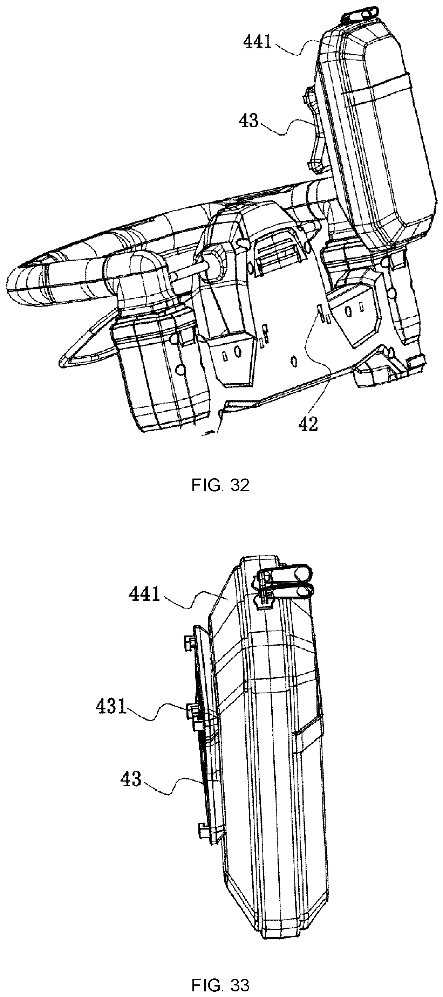

FIG. 32 is a partial structural view of an operating device according to an example of the present invention;
FIG. 33 is a schematic view illustrating the connection relationship between a storage box and a second mounting portion when an attachment is the storage box according to an example of the present invention;

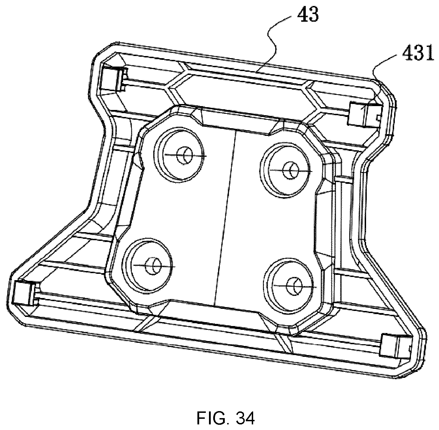

FIG. 34 is a structural view of a second mounting portion according to an example of the present invention;

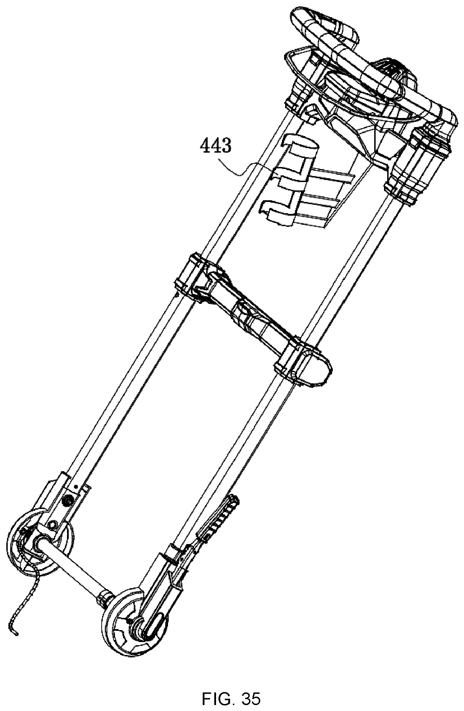

FIG. 35 is structural view one of an operating device when an attachment is a phone holder according to an example of the present invention;

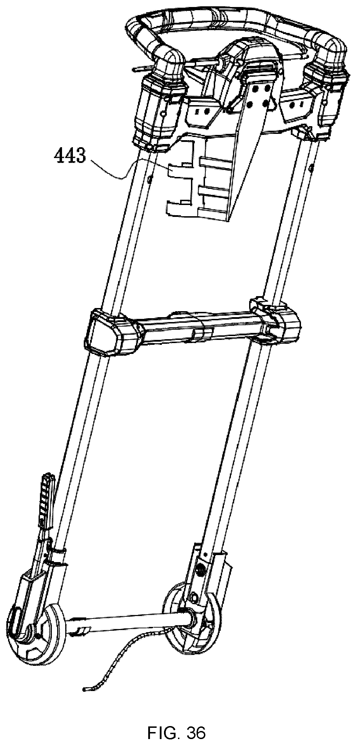

FIG. 36 is structural view two of an operating device when an attachment is a phone holder according to an example of the present invention;

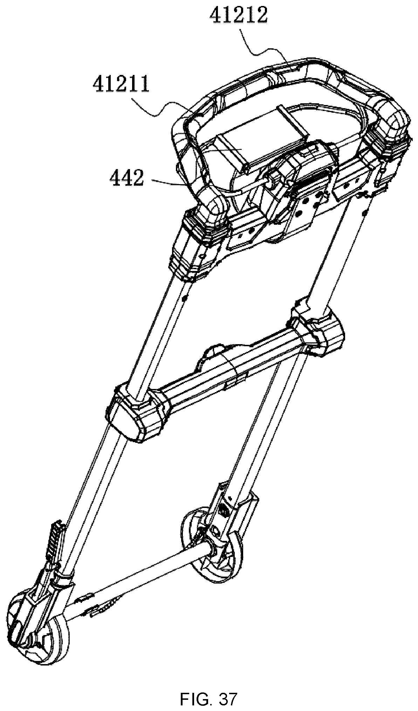

FIG. 37 is a structural view of an operating device when an attachment is a cup holder according to an example of the present invention;

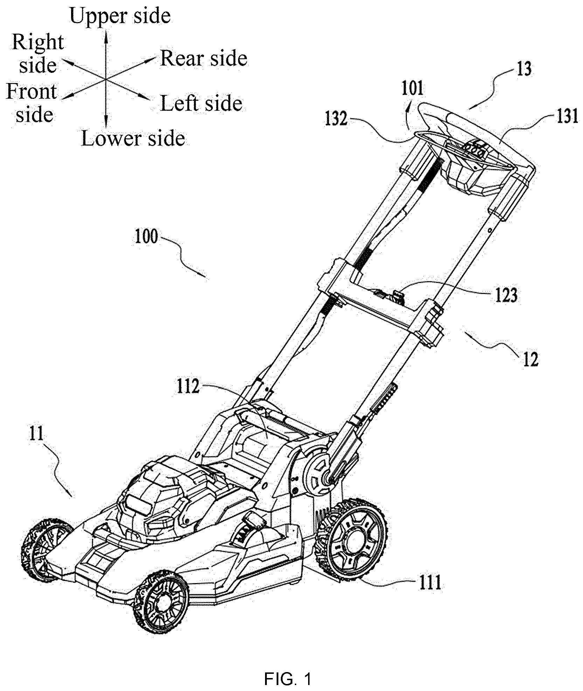

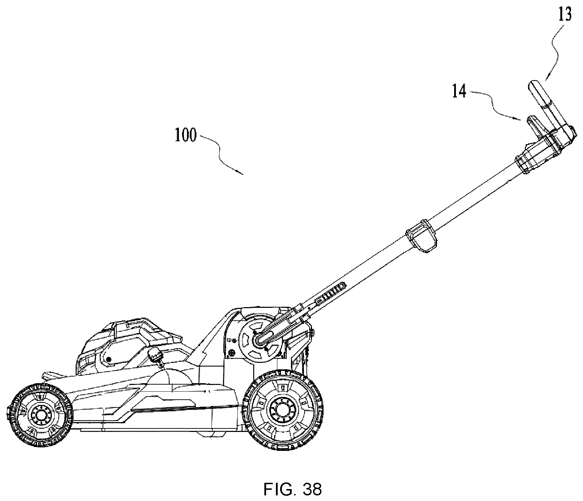

FIG. 38 is a side view of the walk-behind working machine in FIG. 1;

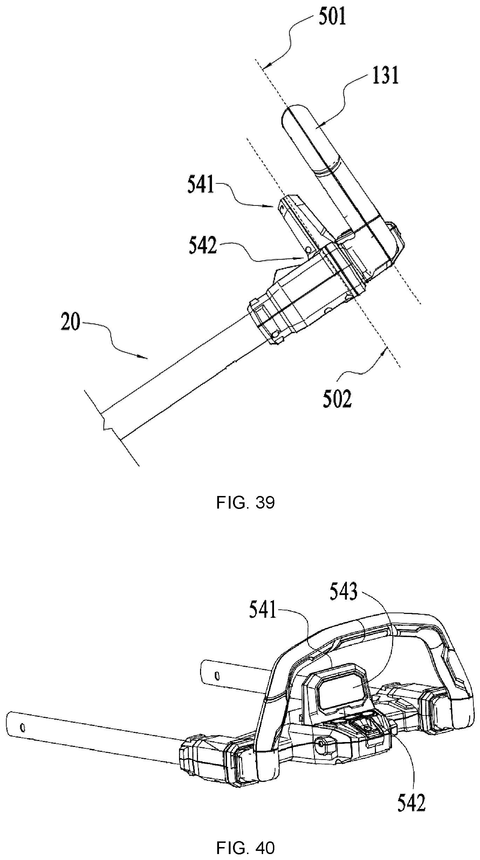

FIG. 39 is a partial enlarged view of FIG. 38;
FIG. 40 is a schematic view of a display of the walk-behind working machine in FIG. 1;

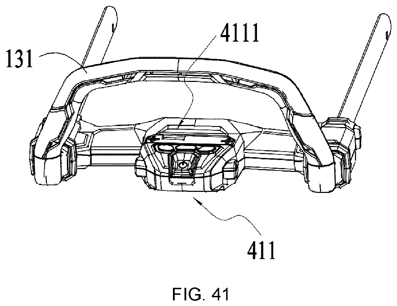

FIG. 41 is a schematic view of a mounting structure used for mounting a display on a handle device.

### DETAILED DESCRIPTION

The present invention is described below in detail in conjunction with drawings and examples.

In the description of the present invention, it is to be noted that orientations or position relations indicated by terms such as "upper", "lower", "left", "right", "front", and "rear" are based on the drawings and not necessarily the orientation relations during the actual operation of the user. These orientations or position relations are intended only to facilitate and simplify the description of the present invention and not to indicate or imply that a device or element referred to must have such particular orientations or must be configured or operated in such particular orientations. Thus, these orientations or position relations are not to be construed as limiting the present invention. In addition, terms such as "first" and "second" are used merely for the purpose of description or are used for distinguishing between different structures or components, and are not to be construed as indicating or implying relative importance.

FIG. 1 shows a walk-behind working machine, specifically a working machine such as a mower or a snow thrower that can work in grasslands, snowfields, or other garden environments and has a pushable function. As an optional example, the mower is used as an example for description.

As shown in FIG. 1, a mower 100 mainly includes a body 11, a handle device 13, and a connecting rod assembly 12. The body 11 includes a walking assembly 111 and a drive assembly (not shown in the figure) for driving the walking assembly 111. The handle device 13 includes a grip 131 for a user to hold. The connecting rod assembly 12 connects the body 11 to the handle device 13. It is to be understood that another walk-behind working machine such as the snow thrower may also include the handle device 13, the body 11, the walking assembly 111, the grip 131, and other components. In this example, the walking assembly is a wheel assembly.

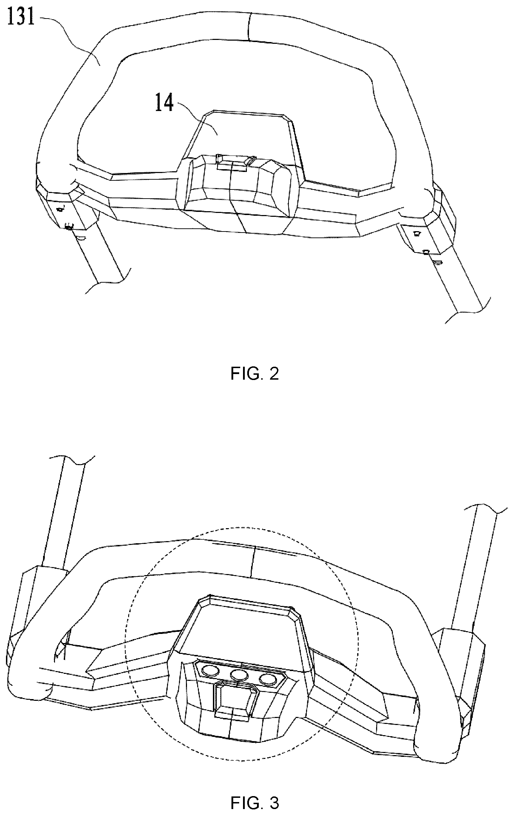

In an example, a display 14 (see FIG. 2) is located on the handle device 13 and connected to the grip 131. It is to be noted that the position of the display 14 is not limited to being fixed on the handle device 13, and the display 14 may also be configured to be slidably or rotatably connected to the grip 131 of the handle device 13. For example, the angle of the display 14 is adjusted according to the requirements of the user, or the display 14 not in need is folded by sliding or rotating. The display 14 may also be configured to be located on the connecting rod assembly 12 or the body 11. The specific position and connection manner of the display 14 are not limited.

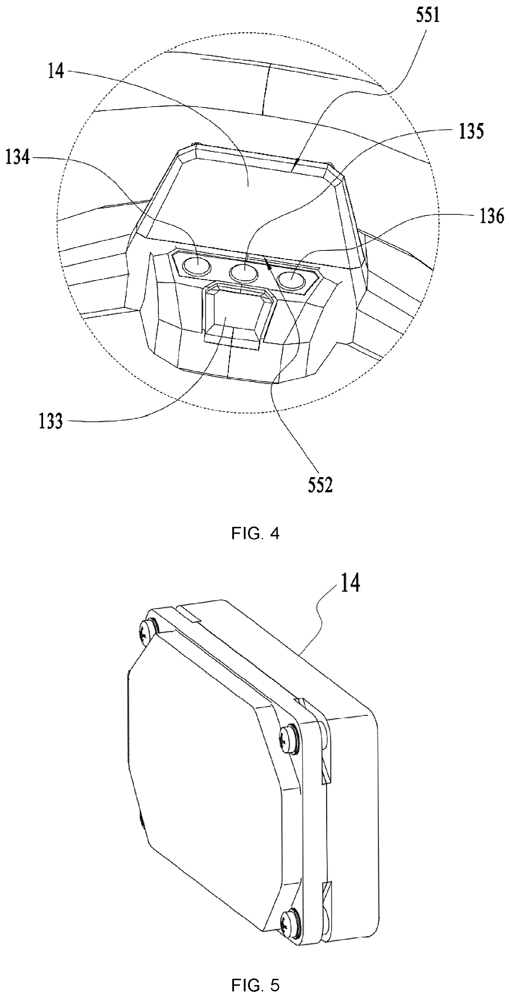

As shown in FIG. 4, the mower 100 includes a display switch 133. When the display switch 133 is activated, the display 14 is lit, and the relevant information of the mower 100 is displayed on the display 14.

In an example, the mower 100 involved in this example includes a self-traveling mode switch 136. The self-traveling mode switch 136 is capable of adjusting the mower 100 to a self-traveling mode, and in the self-traveling mode, the mower 100 is capable of adjusting the self-traveling speed according to the magnitude of the thrust applied by the user. In addition, the mower 100 may be adjusted to a hand-push mode by adjusting the self-traveling mode switch 136. In the hand-push mode, the mower 100 cannot travel independently and relies on only the push force applied by the user to move. When the user triggers the display switch 133 to light up the display 14, the current self-traveling mode information of the mower 100 is displayed on the display 14. At this time, if the user triggers the self-traveling mode switch 136 to adjust the mower 100 to the self-traveling mode, for example, from the hand-push mode to the self-traveling mode, the display 14 correspondingly displays that the mower 100 is changed from the hand-push mode to the self-traveling mode.

In an example, the mower 100 involved in this example includes a blade mode switch 134 controlling the rotational speed of the blade of the mower 100. When the display 14 is lit, the blade mode switch 134 is pressed, and then the mower 100 enters a constant low-speed mode, an automatic variable speed mode, and a constant high-speed mode in sequence. In the constant low-speed mode, the blades of the mower 100 rotate at a constant lower speed. In the automatic variable speed mode, the rotational speed of the blades of the mower 100 is automatically adjusted according to the magnitude of the resistance, and this mode is the default working mode of the mower 100. In the constant high-speed mode, the blades of the mower 100 rotate at a constant higher speed. When the user triggers the display switch 133 to light up the display 14, the current blade mode information of the mower 100 is displayed on the display 14. At this time, if the user triggers the blade mode switch 134 to adjust the blade mode of the mower 100, for example, from the automatic variable speed mode to the constant low-speed mode, the display 14 correspondingly displays that the mower 100 is changed from the automatic variable speed mode to the constant low-speed mode.

The mower 100 involved in this example further includes a folding switch 112, a telescopic switch 123, and a body switch 132. The folding switch 112 is used for controlling whether the mower 100 is foldable, the telescopic switch 123 is used for controlling whether the connecting rod assembly 12 of the mower 100 is telescopic, and the body switch 132 is used for controlling the drive assembly located on the body 11. In this example, the body switch 132 is a trigger 132, and the trigger 132 is rotatable along a first direction 101 (see FIG. 1). Only after the display 14 is lit, the user can adjust the function modes of the mower 100 through the self-traveling mode switch 136, the blade mode switch 134, a headlamp switch 135, and the like. When the user adjusts the folding switch 112 and the telescopic switch 123 so that the mower 100 is in a state where the folding function and the telescopic function are locked at the same time, the user closes the trigger 132 and the grip 31 of the handle device 13 to activate the drive assembly so that the mower 100 enters a cutting working state. In the working state of the mower 100, the trigger 132 needs to be kept in the closed state all the time. If the user releases the trigger 132 during operation, the drive assembly of the mower 100 stops supplying power so that the mower 100 stops the cutting operation.

In an example, light information of the walk-behind working machine is displayed on the display 14. In this example, the headlamp switch 135 (see FIG. 4) is used for controlling functions such as turning-on, turning-off, and brightness adjustment of the light of the mower 100. When the light of the mower 100 is on, this state is correspondingly displayed on the display 14. For example, if a first light of the mower 100 is on and a second light is off, the user can directly know whether a certain light is on through the display 14. For another example, if a certain light of the mower 100 is adjusted from the first brightness to the second brightness by the user, a corresponding display is made on the display 14. Therefore, when the user uses the mower 100 to perform operations, the user can be more aware of the current working state of the light, which is conducive to flexibly adjusting the lighting state and brightness mode of the light by the user according to the situation without having to trigger a light switch multiple times to "detect" the current illumination mode.

In an example, power information of the mower 100 is displayed on the display 14. In this example, the drive assembly of the mower 100 includes a battery pack, so power-related information such as the current power and remaining power of the battery pack is displayed on the display 14. Here, the remaining power (that is, the available power) may be displayed in a form of the percentage of the remaining power in the total power when the battery pack is fully charged, may be displayed in a form of the available time of the remaining power in the current working mode or the default working mode of the mower 100, may be displayed in conjunction with graphics, schematic views, or the like, or may be expressed in a form that can be understood by other users and can reflect the power condition.

In an example, fault information of the mower 100 is displayed on the display 14. In this example, if a motor of the mower 100 fails to start due to a fault, a corresponding reminder is displayed on the display 14 to inform the user to start the motor after resolving the corresponding fault.

In an example, the display 14 is configured to be directly operated by the user to adjust the walk-behind working machine. In this case, the walk-behind working machine does not need to have specific function keys, such as the self-traveling mode switch 136 and the blade mode switch 134, and the user can directly touch the display 14 to adjust the working mode of the walk-behind working machine. In other examples, the function keys may be integrated together with the display 14 and integrated on the display 14.

In an example, the walk-behind working machine is connected to an electronic device of the user via Bluetooth, and information about the electronic device is displayed on the display 14. When the user connects the electronic device (such as a mobile phone) of the user to the walk-behind working machine via Bluetooth, some information about the electronic device connected by the user is displayed on the display 14, such as the weather display and incoming call reminder. For another example, when a severe weather warning occurs on the electronic device of the user, the display 14 of the mower 100 simultaneously sends a reminder to the user, foretelling that the weather will soon be unfavorable for outdoor working. It is to be understood that the electronic device of the user may also be connected to the walk-behind working machine through a specific connection line, not limited to the Bluetooth connection.

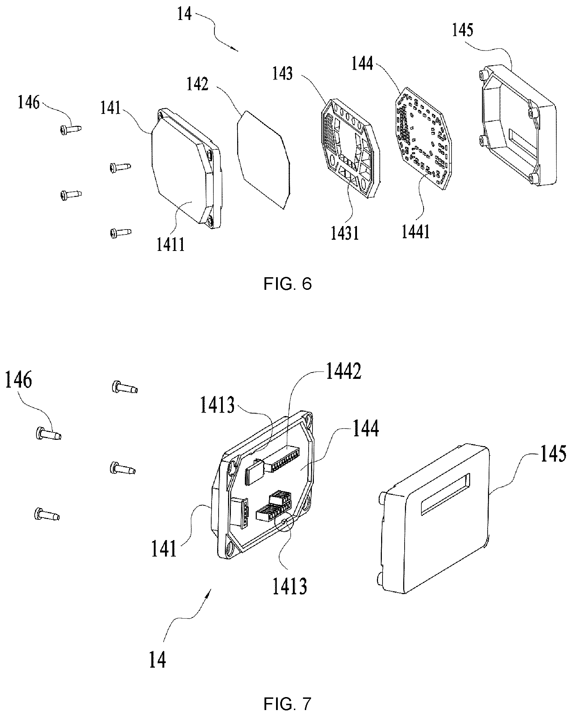

FIGS. 5 to 8 disclose a specific structure of the display 14 of the walk-behind working machine. The display 14 includes a circuit board 144, a transparent cover 141, an image portion 142, a light guide portion 143, and a fixed cover 145. The circuit board 144 includes a common component 1442 (see FIG. 7) for transmitting power and signals. Light emitters 1441 (see FIG. 6) are disposed on the circuit board 144. The light guide portion 143 basically covers the light emitters 1441. The transparent cover 141 has a certain degree of transparency. The circuit board 144 is located between the transparent cover 141 and the fixed cover 145.

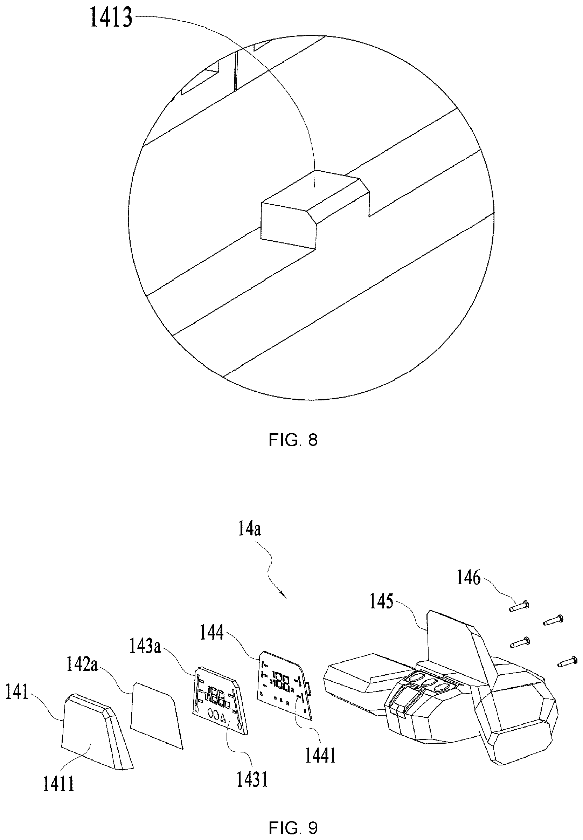

As shown in FIGS. 7 and 8, the image portion 142, the light guide portion 143, and the circuit board 144 are assembled together in the transparent cover 141 and fixed by a snap 1413. In this solution, screws 146 only need to fix the transparent cover 141 and the fixed cover 145, while other movable internal components are fixed by the transparent cover 141 through the snap 1413.

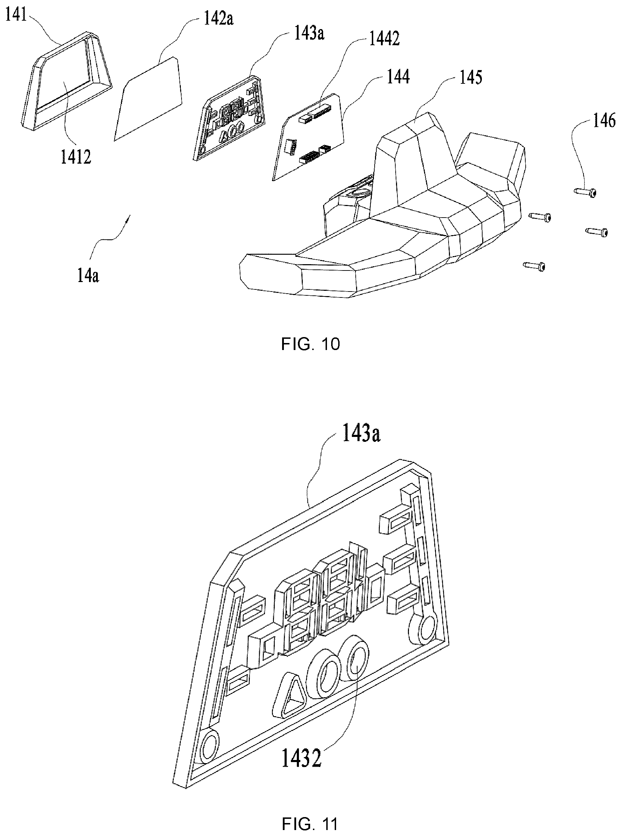

FIGS. 9 and 10 show an example in which the display 14 is applied on the mower 100, the image portion 142 is a type of image film 142a, and the image film 142a is located between the transparent cover 141 and the light guide portion 143 and is glued on a first surface 1431 of a light guide portion 143a. The light guide portion 143 is a light guide plate 143a, and the light guide plate 143a basically covers the light emitters 1441. The light emitters 1441 are light-emitting diodes (LEDs) in this example and may also be other luminous materials or electronic components, which is not limited here.

As shown in FIG. 11, light guide grooves 1432 are disposed on the light guide portion 143a to guide the propagation path of the light emitted by the light emitters 1441 and prevent the light emitted by different light emitters 1441 from interfering with each other. The light guide grooves 1432 have various shapes that are respectively used for reflecting different information such as characters, numbers, symbols, and indicator lights.

In this example, the transparent cover 141 and the fixed cover 145 of a display 14a are fixed together by the screws 146. In the figure, the holes through which the screws penetrate the circuit board 144, the light guide portion 143, and the image portion 142 and the threaded holes on the transparent cover 141 are omitted. Compared with the structure of the display 14 disclosed in FIGS. 5 to 8, in the actual application of this solution, when the light emitters 1441 on the circuit board 144 are arranged, the threads or holes required when the screws penetrate need to be avoided, and the opening of the screw holes on the circuit board 144 and the light guide portion 143 has a certain impact on the space utilization rate of the circuit board 144 and the light guide portion 143.

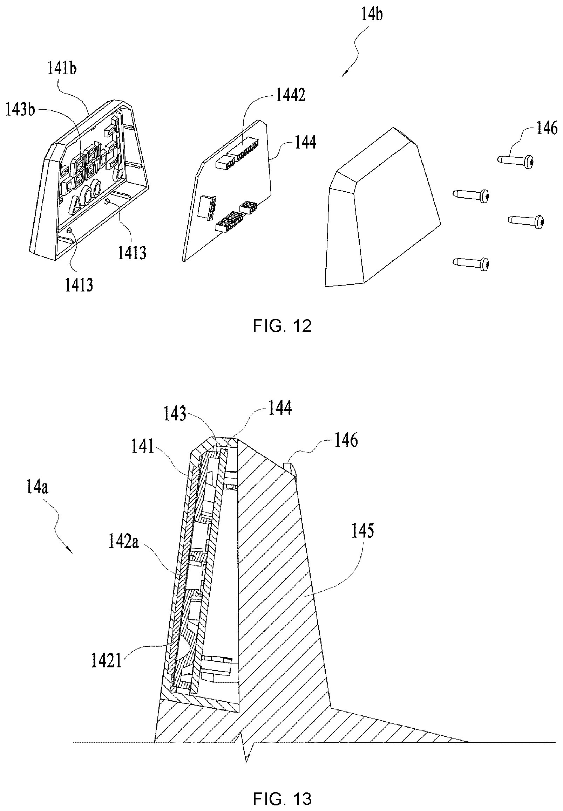

FIG. 12 is another example of the display 14 involved in the present invention. Different from the preceding example, a light guide portion 143b is disposed on a second surface 1412 of the transparent cover 141, the light guide portion 143b is a part of the transparent cover 141, and the light guide portion 143b and the transparent cover 141 are integrally formed during the manufacturing process. In an example, the image portion 142 is directly printed or engraved on a third surface 1411 of the transparent cover 141 instead of being pasted on the transparent cover 141 or the light guide portion 143 in the form of a film.

FIG. 13 is a side sectional view of the display 14 disclosed in FIGS. 9 and 10. In an example, a colloid 1421 may exist between the transparent cover 141 and the image film 142a, and the colloid 1421 basically fills the gap between the transparent cover 141 and the image film 142a so that the air in the gap is squeezed out, preventing the following: fogging caused by high air humidity makes it difficult for the user to see the displayed content of the display 14 clearly. In addition, the colloid 1421 may be used as a fixing method to fix the image film 142a on the transparent cover 141.

FIG. 14 shows a telescopic rod structure 200, specifically, a length-adjustable telescopic rod structure 200. The telescopic rod structure 200 may be applied in the walk-behind working machine, and the walk-behind working machine may be a working machine such as a mower 201 (see FIG. 29) or a snow thrower that can work in grasslands, snowfields, and other environments and has a pushable function.

As shown in FIG. 14, the walk-behind working machine has the telescopic rod structure 200, and the telescopic rod structure 200 includes a grip device 24, a telescopic rod assembly 20, and a locking device 23. The grip device 24 may be held by the user so that the user can operate the walk-behind working machine. The telescopic rod assembly 20 includes a first telescopic rod assembly 21 and a second telescopic rod assembly 22, where the first telescopic rod assembly 21 is basically parallel to the second telescopic rod assembly 22. The locking device 23 is used for adjusting the length of the telescopic rod assembly 20. The telescopic rod structure 200 in FIG. 14 further includes a spring hose 26, and the internal accommodation space may be used for accommodating circuit elements such as electric wires, which is more convenient for the walk-behind working machine controlled by electricity.

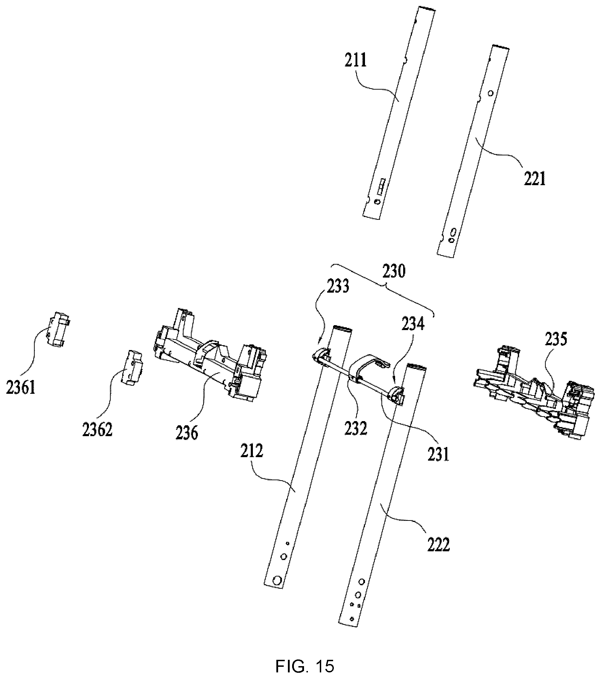

FIG. 15 shows the specific structure after the first telescopic rod assembly 21, the second telescopic rod assembly 22, and the locking device 23 are disassembled. The basic principles of the first telescopic rod assembly 21 and the second telescopic rod assembly 22 are the same, and the first telescopic rod assembly 21 is used as an example for the detailed description. The first telescopic rod assembly 21 includes a first rod 211 and a first rod 212, where the first rod 211 and the first rod 212 have different inner diameters so that the first rod 211 and the first rod 212 can be sleeved together. In this example, the inner diameter of the first rod 211 is less than the inner diameter of the first rod 212 so that the first rod 211 protrudes into the first rod 212.

The locking device 23 includes a locking rod 231, an operating member 232, and a locking assembly 230. The locking assembly 230 is further divided into a first locking assembly 233 and a second locking assembly 234. The locking rod 231 connects the first locking assembly 233 to the second locking assembly 234, and the first locking assembly 233 and the second locking assembly 234 are located at two ends of the locking rod 231. A second cover 235 and a second cover 236 provide an accommodation space to limit the locking rod 231, the operating member 232, the locking assembly 230, the first telescopic rod assembly 21, and the second telescopic rod assembly 22 in a fixed space. The principles of the first locking assembly 233 and the second locking assembly 234 are the same. The first locking assembly 233 and the second locking assembly 234 are connected by the locking rod 231 and separately located at two ends of the locking rod 231. Now, the first locking assembly 233 is used as an example for describing the specific structure and principle.

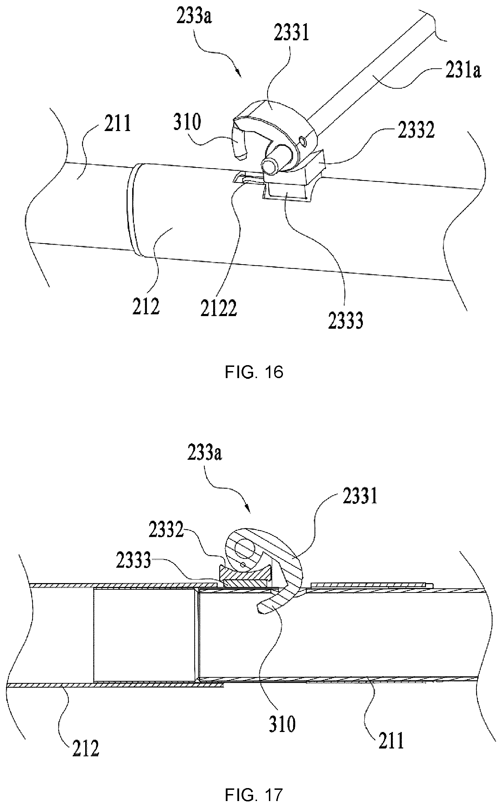

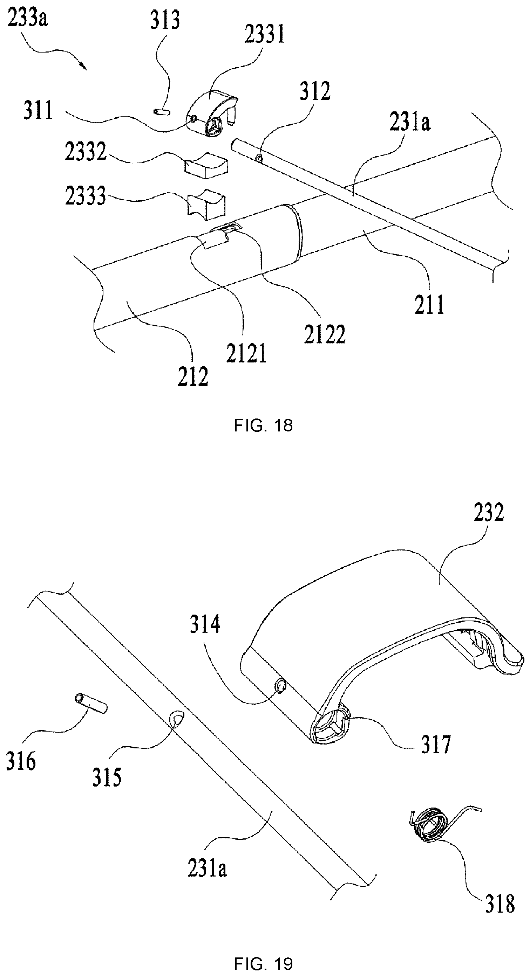

FIGS 16 to 19 are specific technical solutions of the telescopic rod structure 200 as the first example. A first locking assembly 233a includes a first rotary member 2331, a rigid member 2332, and a first elastic member 2333. A pin 313 (see FIG. 18) penetrates a first opening 311 of the first rotary member 2331 and a second opening 312 of a locking rod 231a at the same time, thereby fixing the first rotary member 2331 and the locking rod 231a and ensuring that the first rotary member 2331 rotates synchronously with the locking rod 231a when the locking rod 231a rotates. The first rotary member 2331 further includes a first extension portion 310 (see FIG. 16). When the first rotary member 2331 rotates, the first extension portion 310 rotates synchronously with the first rotary member 2331. As shown in FIG. 17, the first rod 212 includes a hole 2122, and the hole 2122 has a diameter large enough for the first extension portion 310 of the first rotary member 2331 to penetrate the hole 2122. The first rod 212 further includes a first groove 2121, and the first elastic member 2333 penetrates the first groove 2121 and is in contact with the first rod 211. When the first elastic member 2333 is compressed, the first elastic member 2333 presses the first rod 211 and prevents the first rod 211 from moving along the axial direction of the first rod 211.

As shown in FIG. 16, the locking assembly 233a is in a first state, the first elastic member 2332 is released, and the first extension portion 310 of the first rotary member 2331 is located outside the hole 2122 of the first rod 212. At this time, the first rod 211 and the first rod 212 are telescopic along the up and down direction, that is, in this state, the length of the first telescopic rod assembly 21 is adjustable.

As shown in FIG. 17, the first rotary member 2331 includes a cam surface, the cam surface is in contact with the rigid member 2332, and the first elastic member 2333 is located below the rigid member 2332. When the locking assembly 233a is in a second state, the first elastic member 2333 is pressed by the rigid member 2332 so that the thickness of the first elastic member 2333 becomes smaller. In conjunction with FIG. 18, the frictional resistance generated when the first elastic member 2333 is pressed prevents the first rod 211 from further extending into the first rod 212; and the first extension portion 310 of the first rotary member 2331 is located inside the hole 2122 of the first rod 212, so as to lock the relative position between the first rod 211 and the first rod 212. At this time, the first rod 211 and the first rod 212 are locked along the axial direction of the first telescopic rod assembly 21 through the first extension portion 310, that is, in this state, the length of the first telescopic rod assembly 21 is fixed.

It is to be noted that, in some examples, the first elastic member 2333 and the rigid member 2332 may be the same component, which is not limited here.

As shown in FIG. 19, a pin 316 penetrates a second opening 315 on the locking rod 231 and a third opening 314 on the operating member 232 at the same time, and a torsion spring 318 is located in an engagement groove 317 of the operating member 232. In another example of the locking rod 231 (see FIGS. 20 and 21), the section of the locking rod 231b on a plane perpendicular to the axis of the locking rod 231b is an irregular circular shape, and the operating member 232 and the locking rod 231 can be fixed without the need for a pin.

It is to be noted that no matter which example is used to connect the locking rod 231, the operating member 232, the first locking assembly 233, and the second locking assembly 234, the first locking assembly 233 and the second locking assembly 234 can be controlled through the rotation of the locking rod 231. That is to say, when the operating member 232 is operated, the first telescopic rod assembly 21 and the second telescopic rod assembly 22 are locked or released at the same time so that the user does not need to operate the locking assembly on a certain side separately to lock or release the telescopic rod structure 200. A connecting rod 231 is provided and connects the first locking assembly 233 to the second locking assembly 234, and the locking assemblies on two sides are in the same state so that the unlocking or locking operation of the user is more stable and reliable and is less likely to fail.

FIGS. 22 to 26 show the internal structure of the telescopic rod structure 200 as the second example. The internal structure of a first locking assembly 233b is described below as an example.

As shown in FIGS. 23 and 24, the first locking assembly 233b includes a second rotary member 2335, a lock 2336, an elastic sleeve 2337, and a second elastic member 2338. A locking rod 231c includes a mating portion 322 and a second extension portion 321. The mating portion 322 mates with a first mating surface 351 of the second rotary member 2335. When the locking rod 231c rotates, the second rotary member 2335 rotates synchronously. The lock 2336 includes at least one limiting portion 363, and the limiting portion 363 is limited by one of the second cover 235 and the second cover 236 or both the second cover 235 and the second cover 236 so that the lock 2336 cannot rotate and can only move along the axial direction of the locking rod 231c. The second rotary member 2335 further includes a second mating surface 352. The second mating surface 352 mates with a third mating surface 361 of the lock 2336. When the second rotary member 2335 rotates, the lock 2336 is displaced along the axial direction of the locking rod 231c. Therefore, the rotation of the locking rod 231c causes the lock 2336 to enter or move out of the telescopic rod assembly 21.

Now focusing on FIGS. 25 and 26, the first locking assembly 233b in FIG. 25 is in the first state. At this time, a second extension portion 362 on the lock 2336 is located outside a fourth opening 2111 of the first rod 211, the second elastic member 2338 is released, the first rod 211 may extend downward into the first rod 212, and the elastic sleeve 2337 is separated from the outer wall of the first rod 211 and does not apply a friction to the first rod 211. That is, in this state, the length of the first telescopic rod assembly 21 is adjustable. The first locking assembly 233b in FIG. 26 is in the second state. At this time, the locking rod 231c rotates by a certain angle from the first state so that the distance between the second mating surface 352 of the second rotary member 2335 and the third mating surface 361 of the lock 2336 is reduced, while the axial position of the locking rod 231c remains unchanged. In this manner, the second extension portion 362 on the lock 2336 moves into the fourth opening 2111 of the first rod 211, and the first rod 211 cannot continue extending downward into the first rod 212. At the same time, the second elastic member 2338 is pressed, and the elastic sleeve 2337 fits the outer wall of the first rod 211 and applies a friction to the first rod 211, further preventing the first rod 211 from moving relative to the first rod 212. That is, in this state, the length of the first telescopic rod assembly 21 is fixed.

It is to be noted that, in some examples, the elastic sleeve 2337 may be used as a part of the lock 2336 and integrally formed with the lock 2336, which is not limited here.

FIG. 27 is another example of the operating member 232 that is different from that in FIG. 1. It is to be pointed out here that changes in the specific position and opening angle of the operating member 232 do not affect the effect of the present invention and the design of changing the position of the operating member 232 without changing the implementation principle of the telescopic rod structure 200 falls within the scope of the present invention.

Referring to FIG. 28, in some examples, the first rod 211, the first rod 212, and a first intermediate rod 213 may further be included, that is, a connecting rod is added between the first rod 211 and the first rod 212, but the implementation of the function is not affected.

The function of the second cover 235 and the second cover 236 is to provide a closed and stable space for the internal assembly. As shown in FIG. 15, a first end cover 2361 and a second end cover 2362 are additionally provided on the second cover 236 to facilitate the assembly of the first locking assembly 233 and the second locking assembly 234. Alternatively, as shown in FIG. 22, the second cover 236 and the second cover 235 are directly assembled, which is suitable for the case where the locking assembly 230 is easier to assemble. In addition, the forms of the cover plates are not limited to the second cover 235 and the second cover 236, and the cover plates may also be a left cover and a right cover along the axial direction of the locking rod 231 or a combination of the left cover, the right cover, and an intermediate cover. The forms of the cover plates are not limited here.

FIG. 29 shows a walk-behind working machine 201. The walk-behind working machine 201 includes the grip device 24, the telescopic rod assembly 20, the locking device 23, a walking assembly 25, a cutting assembly 27, and the motor (not shown in the figure).

The grip device 24 is used for the user to hold. The telescopic rod assembly 20 includes the first telescopic rod assembly 21 and the second telescopic rod assembly 22. The walking assembly 25 and the grip device 24 are connected by the first telescopic rod assembly 21 and the second telescopic rod assembly 22. The cutting assembly 27 is used for completing a mowing operation. The motor is used for driving the cutting assembly 27 to perform the mowing operation. The specific technical features are stated above and not repeated here.

It is to be noted that the orientation of the view in FIG. 29 is different from the orientations shown in FIGS. 14 to 28, FIG. 29 shows the use angle of the telescopic rod in practical applications, and in practical applications, the positions of the locking device 23 and the operating member 232 on the telescopic rod structure 200 may be adjusted, which is not limited to the manner disclosed in the drawings of this specification. If the operating member 232 is an operating wrench, the wrenching direction and angle of the wrench may be changed with the change of the overall technical solution and finally serve an operator so that the operator has a good operating experience.

FIG. 30 shows a rear-traveling self-propelled working machine, which may specifically be a mower 400, a snow thrower, a trolley, or another working machine with a self-propelled function. As an optional example, the mower 400 is used as an example for description. Specifically, the mower 400 in this example is a push mower 400.

As shown in FIG. 30, the mower 400 mainly includes a body 40, an operating device 41, and a grass collecting device 45. The body 40 includes a working element for implementing the function of the walk-behind working machine. Specifically, the body 40 includes a chassis 401, a power mechanism 402, and a walking assembly 403, and the chassis 401 serves as the main support structure of the mower 400 and assembles all parts into one. The walking assembly 403 is mounted on the chassis 401 and used for supporting the chassis 401, and the walking assembly 403 rotates relative to the chassis 401 so that the chassis 401 moves on the ground. The walking assembly 403 may be wheels. The power mechanism 402 is mounted on the chassis 401 and used for driving the walking assembly 403 to rotate, thereby driving the mower 400 to move on the ground. The grass collecting device 45 is connected to the rear of the body 40 and used for collecting the cut weeds. The grass collecting device 45 may specifically be a grass collecting basket or a grass collecting box.

The operating device 41 is connected to the body 40 and used for the user to operate the mower 400 on the rear side of the mower 400. The operating device 41 in this example includes a switch box 411, and an electronic component for controlling the working state of the working element is disposed in the switch box 411.

As shown in FIGS. 31 and 32, the walk-behind working machine further includes a first mounting portion 42 disposed on the switch box 411 and a second mounting portion 43 detachably connected to the first mounting portion 42, where the second mounting portion 43 can be connected to or formed on different attachments. The walk-behind working machine can be attached with different attachments, has relatively high universal interchangeability, can satisfy different use requirements of the user, and improves user satisfaction.

As shown in FIGS. 31, 35, and 36, the attachments in this example include a storage box 441, a phone holder 442, a cup holder 443, an electric fan, and the like, and items such as a mobile phone and a key may be placed in the storage box 441.

In an example, with continued reference to FIG. 30, the operating device 41 further includes a handle 412 for the user to push the mower 400 to travel, and the switch box 411 is fixed to the handle 412. In this structure, the attachment is relatively close to the user and is convenient for the user to pick up and use.

Further, the handle 412 includes a grip 4121 and a connecting rod 4122. The grip 4121 is for the user to hold, so as to apply a force to push the mower 400. The connecting rod 4122 is a hollow long rod structure, and the connecting rod 4122 is used for connecting the grip 4121 to the body 40. Two connecting rods 4122 are provided side by side in the left and right direction, thereby improving the connection stability between the grip 4121 and the body 40. In this example, the grip 4121 at least partially extends along a direction of a first straight line, and the connecting rods 4122 extend along a direction of a second straight line perpendicular to the first straight line.

The grip 4121 is made of plastic material, which is convenient for forming and connecting with other parts, while the connecting rods 4122 are made of metal material to ensure the strength.

One end of the switch box 411 is fixed to the grip 4121, and the other end of the switch box 411 is fixed to the connecting rod 4122. The switch box 411 is used for accommodating an operating switch. The switch box 411 includes a switch box cover and a switch box seat, and the switch box cover and the switch box seat clamp the grip 4121 and the connecting rod 4122 from two sides.

In this example, the first mounting portion 42 and the second mounting portion 43 are connected in a snap-fit manner. The snap connection has a simple structure and is easy to implement and operate. Of course, other detachable connection manners between the first mounting portion 42 and the second mounting portion 43 may be adopted, such as a threaded connection, a hinge connection, and a magnetic attraction connection, which may be designed according to actual conditions.

In an example, as shown in FIGS. 32 to 34, the first mounting portion 42 is a mounting hole opened on the switch box 411, and a snap 431 mating with the mounting hole is disposed on the second mounting portion 43. The snap 431 snaps into the mounting hole, so as to achieve the quick assembly and disassembly of the first mounting portion 42 and the second mounting portion 43. At least two snaps 431 and at least two mounting holes are provided to improve the connection stability. In this example, four snaps 431 and four mounting holes are separately provided.

Further, in an example, the first mounting portion 42 is the snap 431 disposed on the switch box 411, and a mounting hole mating with the snap 431 is disposed on the second mounting portion 43.

The second mounting portion 43 is a mounting plate, and the mounting plate and the first mounting portion 42 are connected in a snap-fit manner. The mounting plate is provided with the snap 431, and the snap 431 and the mounting hole are connected in a snap-fit manner.

The mounting plate and the attachment are detachably connected by screws so that different attachments can be replaced. The mounting plate is used as an intermediate connector. One end of the mounting plate is connected to the first mounting portion 42 on the switch box 411, and the other end of the mounting plate is connected to the attachment. The types of the attachments connected to the mounting plate may be replaced according to actual requirements, the attachments are interchangeable, more additional functions can be implemented, the versatility and adaptability are improved, and the diverse use requirements of the user can be satisfied. Of course, the mounting plate and the attachment may be connected in a detachable manner in which a hook is hooked to a hanging groove, as long as the quick disassembly and assembly between the mounting plate and the attachment can be achieved.

In this example, as shown in FIGS. 35 and 36, the grip 4121 includes a first grip 41211 for the left hand of the user to hold and a second grip 41212 for the right hand of the user to hold, where the first grip 41211 and the second grip 41212 are symmetrical about a symmetry plane. When the attachment is the phone holder 442, the phone holder 442 is located between the first grip 41211 and the second grip 41212. In this example, the first grip 41211 and the second grip 41212 are an integral structure. Of course, the grip 4121 may also be formed by connecting the first grip 41211 and the second grip 41212 that are independent of each other.

When the attachment is the phone holder 442, the phone holder 442 includes a first connecting plate and a bracket body. The first connecting plate is U-shaped, one end of the first connecting plate is connected to the mounting plate, and the other end of the first connecting plate bypasses the switch box 411 and is connected to the bracket body. The bracket body is used for clamping the mobile phone, and the bracket body is set upward and inclined toward the face of the user, so as to facilitate the operation and use of the user. The mobile phone communicates with the mower 400 to control the mower 400. Specifically, this function can be implemented through connection manners such as Bluetooth.

As shown in FIG. 37, when the attachment is the cup holder 443, the cup holder 443 is located between the two connecting rods 4122. Specifically, the cup holder 443 includes a second connecting plate and a bracket body. One end of the second connecting plate is connected to the mounting plate, and the other end of the second connecting plate is fixed with the bracket body. The bracket body is located below the switch box 411 and between the two connecting rods 4122, and the frame body is used for placing a water cup or a drink cup.

When the attachment is an electric fan, the base of the electric fan is connected to the mounting plate, and the electric fan is set toward the user so that the air can be blown to the user when the user uses the mower 400, thereby improving user comfort. It is to be understood that the electric fan referred to in this example is a small electric fan, such as a desk small electric fan and a small electric fan that can be clamped on the head of a bed.

The display 14 in FIG. 1 is further described below.

FIG. 38 is a side view of the mower 100 in FIG. 1, and FIG. 39 is a partial enlarged view of FIG. 38. As shown in FIG. 39, the grip 131 is basically symmetrical about a first middle plane 502, the first middle plane 501 is a plane perpendicular to a paper surface, and the first middle plane 502 extends along the left and right direction of the mower 100. The display 14 is basically symmetrical about a second middle plane 502, the second middle plane 502 is a plane perpendicular to the paper surface, and the second middle plane 502 extends along the left and right direction of the mower 100. Therefore, from the perspective of the side view of the mower 100, the grip 131 extends basically along the first middle plane 501, and the display 14 extends basically along the second middle plane 502. The first middle plane 501 is basically parallel to the second middle plane 502. Here, "basically" means that the included angle formed by the first middle plane 501 and the second middle plane 502 is less than or equal to 10 degrees.

The second middle plane 502 is basically perpendicular to the telescopic rod assembly 20. The telescopic rod assembly 20 is a telescopically adjustable rod and connects the body 11 to the handle device 13. The details are shown in the specification above.

As shown in FIG. 40, the display 14 includes a top 541 at the top end and a bottom 542 at the bottom end. The top 541 is located at the topmost end of the display 14, the top 541 is not directly connected to the grip 131, and the bottom 542 is not directly connected to the grip 131 either. The display 14 includes a display interface 543 for presenting information about the walk-behind working machine to the user. The display interface 543 may be made of LEDs, a liquid-crystal display (LCD), or other luminous materials. It is to be noted that the top 541 here may be understood as follows: when the display 14 is perpendicular to the horizontal plane, the top 541 of the display 14 is a housing, the housing surrounds the outside of the display interface 543, and the top 541 is located on the upper part of the display interface 543. In an example, the top 541 is located above the display 14. In an example, if the display interface 543 covers the upper half of the display 14, the top 541 is the upper part of the display interface 543.

As shown in FIG. 41, the switch box 411 is connected to two ends of the grip 131. The switch box 411 includes a mounting structure 4111, and the bottom 542 of the display 14 is mounted to the mounting structure 4111 of the switch box 411. The display 14 may be mechanically and electrically connected to the switch box 411 through the mounting structure 4111, a control assembly is disposed in the switch box 411, and the control assembly is electrically connected to the display interface 543 of the display 14. The display 14 is detachably mounted to the mounting structure 4111 of the handle device 13.

In an example, the display 502 is non-rotatably fixed in the mounting structure 4111.

In an example, the top 541 of the display 14 is rotatable about the bottom 542, and the included angle formed by the first middle plane 501 and the second middle plane 502 is less than or equal to 45 degrees. In some examples, the included angle formed by the first middle plane 501 and the second middle plane 502 may be 15 degrees, 30 degrees, or 45 degrees.

Now, referring to FIG. 4, in an example, viewing the display 14 from a direction perpendicular to the display interface 543 of the display 14, only one side of the display 14 is connected to the handle device 13. In an example, only one side of the display 14 is connected to the switch box 411.

The display 14 viewed from the direction perpendicular to the display interface of the display 14 has at least an upper boundary 551 and a lower boundary 552, where the upper boundary 551 is basically parallel to the lower boundary 552, and the lower boundary 552 is connected to the switch box 411. In an example, the upper boundary 551 of the display 14 may be connected to the grip 131 so that the lower boundary 552 of the display 14 is suspended, and the control assembly is connected to the switch box 411 through the wire in the grip 131.

According to the technical solution disclosed in the present invention, one side of the display 14 is directly connected to the handle device 13, and the other side of the display 14 is not connected to the handle device 13 so that the display 14 may be configured to be a slidable, detachable, and rotatable structure, thereby improving the practicability of the display 14. In the first aspect, the rotatable display 14 satisfies the observation requirements of more users; in the second aspect, the detachable display 14 facilitates the replacement of attachments, for example, replacing the display 14 with the phone holder 442, to implement more functions; in the third aspect, when the power of the mower 100 is insufficient, the user may choose to remove the display 14 to save power.

It is to be emphasized that the technical solutions involved in the present invention can be applied not only to the mower but also to other pushable working machines such as the snow thrower.

## Claims

1. A walk-behind working machine, comprising:
a body (11) comprising a walking assembly (111) and a drive assembly for driving the walking assembly;
a handle (13) device comprising a grip (131) for a user to hold; and
a connecting rod assembly (12) for connecting the body to the handle device;
wherein the walk-behind working machine further comprises a display (14) including a display interface (543) for presenting information about the walk-behind working machine to a user,
the handle device comprises a switch box (411), and an electronic component for controlling a working state of a working element is disposed in the switch box;
the display viewed from a direction perpendicular to the display interface has at least an upper boundary (551) and a lower boundary (552), wherein the upper boundary is basically parallel to the lower boundary, and the lower boundary is connected to the switch box; and
the display includes a top (541) at a topmost end of the display and a bottom (542) at a bottom end of the display, wherein the top is not directly connected to the grip, and the bottom is not directly connected to the grip either, **characterized in that**
only one side of the display is connected to the handle device; and
the bottom of the display is connected to the switch box.

2. The walk-behind working machine of claim 1, wherein the display is configured to be slidably and/or rotatably connected to the handle device.

3. The walk-behind working machine of claim 1, wherein one of self-traveling mode information, blade mode information, light information, power information and fault information of the walk-behind working machine is displayed on the display.

4. The walk-behind working machine of claim 1, wherein the display is detachably connected to the handle device.

5. The walk-behind working machine of claim 1, wherein the display is configured to be slidably and/or rotatably connected to the handle device.

## Patentansprüche

1. Eine handgeführte Arbeitsmaschine, umfassend:
einen Körper (11), der eine Fahranordnung (111) und eine Antriebsanordnung zum Antreiben der Fahranordnung umfasst;
eine Griffvorrichtung (13), die einen Griff (131) zum Halten durch einen Benutzer umfasst; und
eine Verbindungsstangenanordnung (12) zum Verbinden des Körpers mit der Griffvorrichtung;
wobei die handgeführte Arbeitsmaschine ferner eine Anzeige (14) umfasst, die eine Anzeigeschnittstelle (543) zum Darstellen von Informationen über die handgeführte Arbeitsmaschine für einen Benutzer aufweist,
die Griffvorrichtung eine Schalterbox (411) umfasst, und ein elektronisches Bauelement zum Steuern eines Arbeitszustands eines Arbeitselements in der Schalterbox angeordnet ist;
die Anzeige, betrachtet aus einer Richtung senkrecht zur Anzeigeschnittstelle, mindestens einen oberen Rand (551) und einen unteren Rand (552) aufweist, wobei der obere Rand im Wesentlichen parallel zu dem unteren Rand ist und der untere Rand mit der Schalterbox verbunden ist; und
die Anzeige ein Oberteil (541) an einem obersten Ende der Anzeige und ein Unterteil (542) an einem unteren Ende der Anzeige umfasst, wobei das Oberteil nicht direkt mit dem Griff verbunden ist und das Unterteil ebenfalls nicht direkt mit dem Griff verbunden ist, **dadurch gekennzeichnet, dass**
nur eine Seite der Anzeige mit der Griffvorrichtung verbunden ist; und
das Unterteil der Anzeige mit der Schalterbox verbunden ist.

2. Die handgeführte Arbeitsmaschine nach Anspruch 1, wobei die Anzeige dazu ausgebildet ist, gleitend und/oder drehbar mit der Griffvorrichtung verbunden zu sein.

3. Die handgeführte Arbeitsmaschine nach Anspruch 1, wobei eine von Selbstfahrmodusinformationen, Klingenmodusinformationen, Lichtinformationen, Leistungsinformationen und Fehlerinformationen der handgeführten Arbeitsmaschine auf der Anzeige angezeigt wird.

4. Die handgeführte Arbeitsmaschine nach Anspruch 1, wobei die Anzeige lösbar mit der Griffvorrichtung verbunden ist.

5. Die handgeführte Arbeitsmaschine nach Anspruch 1, wobei die Anzeige dazu ausgebildet ist, gleitend und/oder drehbar mit der Griffvorrichtung verbunden zu sein.

## Revendications

1. Une machine de travail à conducteur marchant, comprenant :
un corps (11) comprenant un ensemble de déplacement (111) et un ensemble d'entraînement pour entraîner l'ensemble de déplacement ;
un dispositif de poignée (13) comprenant une poignée (131) destinée à être tenue par un utilisateur ; et
un ensemble de tiges de liaison (12) pour relier le corps au dispositif de poignée ;
dans lequel la machine de travail à conducteur marchant comprend en outre un afficheur (14) comprenant une interface d'affichage (543) pour présenter à un utilisateur des informations relatives à la machine de travail à conducteur marchant,
le dispositif de poignée comprend un boîtier d'interrupteur (411), et un composant électronique destiné à commander un état de fonctionnement d'un élément de travail est disposé dans le boîtier d'interrupteur ;
l'afficheur, vu depuis une direction perpendiculaire à l'interface d'affichage, présente au moins une limite supérieure (551) et une limite inférieure (552), dans lequel la limite supérieure est essentiellement parallèle à la limite inférieure, et la limite inférieure est reliée au boîtier d'interrupteur ; et
l'afficheur comprend un haut (541) à une extrémité la plus haute de l'afficheur et un bas (542) à une extrémité inférieure de l'afficheur, dans lequel le haut n'est pas directement relié à la poignée, et le bas n'est pas non plus directement relié à la poignée, **caractérisé en ce que**
un seul côté de l'afficheur est relié au dispositif de poignée ; et
le bas de l'afficheur est relié au boîtier d'interrupteur.

2. La machine de travail à conducteur marchant selon la revendication 1, dans laquelle l'afficheur est configuré pour être relié au dispositif de poignée de manière coulissante et/ou rotative.

3. La machine de travail à conducteur marchant selon la revendication 1, dans laquelle l'une parmi des informations de mode d'auto-déplacement, des informations de mode de lame, des informations d'éclairage, des informations de puissance et des informations de défaut de la machine de travail à conducteur marchant est affichée sur l'afficheur.

4. La machine de travail à conducteur marchant selon la revendication 1, dans laquelle l'afficheur est relié de manière amovible au dispositif de poignée.

5. La machine de travail à conducteur marchant selon la revendication 1, dans laquelle l'afficheur est configuré pour être relié au dispositif de poignée de manière coulissante et/ou rotative.
